# EUROPÄISCHE PATENTSCHRIFT

(11) **EP 2 628 031 B1**
(45) Veröffentlichungstag und Bekanntmachung des Hinweises auf die Patenterteilung: **21.10.2015**
(21) Anmeldenummer: 12772218.9
(22) Anmeldetag: 07.09.2012
(51) Int. Cl.: G01V 8/20, B60R 16/00, E05F 15/74

(54) **OPTISCHE MESSVORRICHTUNG FÜR EIN FAHRZEUG UND KORRESPONDIERENDES FAHRZEUG**
OPTICAL MEASURING DEVICE FOR A VEHICLE AND CORRESPONDING VEHICLE
DISPOSITIF DE MESURE OPTIQUE POUR UN VÉHICULE ET VÉHICULE CORRESPONDANT

(30) Priorität: 12.09.2011 DE 102011112907
(43) Veröffentlichungstag der Anmeldung: 21.08.2013
(73) Patentinhaber: Reime, Gerd, 77815 Bühl (DE)
(72) Erfinder: Reime, Gerd, 77815 Bühl (DE)
(74) Vertreter: Reinhardt, Harry
(86) Internationale Anmeldenummer: PCT/EP2012/003750
(87) Internationale Veröffentlichungsnummer: WO 2013/037465

(56) Entgegenhaltungen:
- EP-A1- 2 159 362
- JP-A- 10 219 770
- US-A1- 2008 296 926

## Beschreibung

Die Erfindung betrifft eine optische Messvorrichtung für ein Fahrzeug der im Oberbegriff des Anspruchs 1 genannten Art sowie ein zugehöriges Fahrzeug mit einer solchen optischen Messvorrichtung.

Aus der dem Oberbegriff der unabhängigen Ansprüche zugrunde liegenden US 2008/0296926 A ist ein Kraftfahrzeug mit einer Sensoreinrichtung bekannt, die Teile eines Außenbereichs des Kraftfahrzeugs auf die Anwesenheit eines Körperteils eines Benutzers oder eines Gegenstands überwacht. Die optische Messvorrichtung weist einen optischen Sender auf, der ein Lichtfeld mit einer vorgegebenen Form auf einer Oberfläche in einem Überwachungsbereich erzeugt. Ein optischer Empfänger empfängt die von der Oberfläche des Lichtfelds reflektierte Empfangsstrahlung. Eine Auswerte- und Steuereinheit wertet die Empfangsstrahlung zur Objekterkennung aus und erzeugt ein Ausgabesignal, wenn eine Veränderung der reflektierten Empfangsstrahlung festgestellt wird. Infolge des Ausgabesignals öffnet sich dann zum Beispiel eine Fahrzeugtüre, wenn die Körperbewegung im Überwachungsbereich erkannt wird.

Aus der EP 1 902 912 A1 ist ebenfalls ein Kraftfahrzeug mit einer Sensoreinrichtung bekannt, welche Teile eines Außenbereichs des Kraftfahrzeugs auf die Anwesenheit eines Körperteils eines Benutzers oder eines Gegenstands überwacht. Hierzu ist die Sensoreinrichtung so angebracht und ausgerichtet, dass ein Teil eines Beins oder Fußes eines neben dem Kraftfahrzeug stehenden Benutzers durch eine einfache Körperbewegung, wie beispielsweise Anheben und/oder Schwenken des Beins oder Fußes, in den von der Sensoranordnung überwachten Teil des Auslösebereichs des Kraftfahrzeugs bringbar ist. Ein korrespondierendes Verfahren öffnet dann nach einer erfolgten Benutzerauthentifikation eine Tür, eine Haube und/oder einen Deckel, wenn die Körperbewegung im Überwachungsbereich erkannt wird.

In der DE 10 2004 041 709 C5 wird beispielsweise ein Fahrzeug mit einer automatisch öffnenden Klappe bekannt. Das beschriebene Fahrzeug umfasst eine aufgrund eines Öffnungsbefehls automatisch öffnende Klappe, wobei der Öffnungsbefehl ohne manuelle Betätigung eines Ent- und/oder Verriegelungsmechanismusses erfolgt, einen Näherungssensor und ein einerseits mit einem Ent- und/oder Verriegelungsmechanismus für die automatisch öffnende Klappe und andererseits mit dem Näherungssensor wirkverbundenes Steuergerät. Das Steuergerät ist derart ausgebildet, dass es das Vorhandensein eines gültigen Zugangsberechtigungsmittels innerhalb eines Umgebungsbereichs erkennt und bei Erkennen eines gültigen Zugangsberechtigungsmittels in Abhängigkeit vom Vorliegen eines Entriegelungssignals des Näherungssensors den Ent- und/oder Verriegelungsmechanismus zur Freigabe der automatisch öffnenden Klappe aktiviert. Der Näherungssensor ist derart am Fahrzeug angeordnet, dass seine Wirkungsrichtung zur Erfassung von Gegenständen nach unten in Richtung Fahrbahn gerichtet ist, so dass ein Benutzer den Näherungssensor durch Schwenken des Fußes im Bereich zwischen dem Fahrzeugaufbau und der Fahrbahnoberfläche schalten kann.

Aus der JP 10 219 770 A ist eine optische Messvorrichtung mit zwei Empfängern bekannt, die eine reflektierte Strahlung von je einem Lichtfeld empfangen, wobei ein Ausgabesignal erzeugt wird, wenn eine vorbestimmte Änderung des Intensitätsunterschieds zwischen den empfangenen Signalen festgestellt wird.

Aus der EP 2 158 362 A ist ferner eine kapazitive Messvorrichtung für ein Fahrzeug bekannt, wobei das Vorhandensein einer Person oder eines Gegenstandes mittels zwei kapazitiven Sensoren ermittelt wird.

Die beschriebenen Lösungen setzen voraus, dass der Benutzer die genaue Position der Sensoranordnung bzw. des Näherungssensors und des zugehörigen Erfassungsbereichs kennt, um das erforderliche Schaltsignal durch die beschriebene Bewegung erzeugen zu können.

Aufgabe der Erfindung ist es, eine optische Messvorrichtung für ein Fahrzeug anzugeben, welche eine vereinfachte Auslösung eines Schaltvorgangs ohne manuelle Betätigung und ohne vorgegebene Gestik ermöglicht, sowie ein korrespondierendes Fahrzeug mit einer solchen optischen Messvorrichtung zur Verfügung zu stellen.

Diese Aufgabe wird erfindungsgemäß durch eine optische Messvorrichtung für ein Fahrzeug mit den Merkmalen des Anspruchs 1 und durch ein Fahrzeug mit den Merkmalen des Anspruchs 12 gelöst. Weitere die Ausführungsformen der Erfindung in vorteilhafter Weise ausgestaltende Merkmale enthalten die Unteransprüche.

Der Grundgedanke der Erfindung basiert darauf, dass in einem Überwachungsbereich auf einer Oberfläche zwei Lichtfelder projiziert werden und die Reflektionen von der Oberfläche erfasst und ausgewertet werden. Die Änderung der Reflexion nur eines bestimmten Lichtfeldes löst dann einen Schaltvorgang aus, wenn die Reflexionen eines weiteren Lichtfeldes nicht beeinflusst werden.

Der mit der Erfindung erzielte Vorteil besteht darin, dass ohne Gestik nur durch Änderung der Reflexion in einem Überwachungsbereich ein Vorgang, wie beispielsweise das Öffnen einer Klappe, einer Einstiegstür und/oder eines Deckels ausgelöst werden kann, wobei der Überwachungsbereich durch die Form der vorgegebenen sichtbaren Lichtfelder vor einer unerwünschten Fehlauslösung, beispielsweise durch Tiere und/oder Gegenstände, die zufällig in den Überwachungsbereich gelangen, geschützt werden kann.

Ausführungsformen der vorliegenden Erfindung stellen eine optische Messvorrichtung für ein Fahrzeug zur Verfügung, welche mindestens einen optischen Sender, welcher eine Sendestrahlung erzeugt und in einen Überwachungsbereich abstrahlt, und mindestens einen optischen Empfänger umfasst, welcher eine resultierende Empfangsstrahlung aus dem Überwachungsbereich empfängt, wobei eine Auswerte- und Steuereinheit die Empfangsstrahlung zur Objekterkennung auswertet. Mindestens ein erster optischer Sender erzeugt durch Aussenden einer gerichteten ersten Sendestrahlung ein erstes Lichtfeld mit einer vorgegebenen Form auf einer Oberfläche im Überwachungsbereich und mindestens ein zweiter optischer Sender erzeugt durch Aussenden einer gerichteten zweiten Sendestrahlung ein zweites Lichtfeld mit einer vorgegebenen Form im benachbarten Umfeld des ersten Lichtfelds, wobei die Auswerte- und Steuereinheit über den mindestens einen optischen Empfänger eine von der Oberfläche des ersten Lichtfeldes reflektierte erste Empfangsstrahlung und eine von der Oberfläche des zweiten Lichtfeldes reflektierte zweite Empfangsstrahlung empfängt und auswertet, wobei die Auswerte- und Steuereinheit ein Ausgabesignal erzeugt, wenn die Auswerte- und Steuereinheit eine durch ein im Überwachungsbereich erkanntes Auslöseobjekt bewirkte Veränderung der reflektierten zweiten Empfangsstrahlung und eine durch das Auslöseobjekt unveränderte reflektierte erste Empfangsstrahlung erkennt.

Ausführungsformen der erfindungsgemäßen optischen Messvorrichtung werden als Umfeldüberwachungsvorrichtung in einem Fahrzeug, insbesondere einem Kraftfahrzeug, eingesetzt, um eine Klappe ohne manuelle Betätigung automatisch zu öffnen. Neben der Umfeldüberwachungsvorrichtung umfasst ein erfindungsgemäßes Fahrzeug ein Zugangsberechtigungssystem, mindestens eine Klappe, welche einen Öffnungsmechanismus aufweist, und ein Steuergerät, welches in Abhängigkeit einer vom Zugangsberechtigungssystems erkannten Zugangsberechtigung und einem von der Umfeldüberwachungsvorrichtung erzeugten Ausgabesignals einen Öffnungsbefehl erzeugt und an den Öffnungsmechanismus der mindestens einen Klappe ausgibt, welche die Klappe ohne manuelle Betätigung automatisch öffnet.

Ein in eines der beiden als Detektionsfelder wirkenden Lichtfelder eingebrachter Gegenstand verändert die Reflektion des korrespondierenden Lichtfelds und kann somit detektiert werden. Die Detektionsfelder zeigen in eine Richtung, so dass eine Person beispielsweise einen Fuß bewusst so in den Erfassungsbereich der optischen Messvorrichtung bringen kann, dass das zweite Lichtfeld zumindest teilweise abgedeckt wird und das erste Lichtfeld nicht berührt wird. Dadurch wird die von dem zweiten Lichtfeld bzw. Detektionsfeld reflektierte zweite Empfangsstrahlung verändert und die Auswerte- und Steuereinheit erkennt bei der Auswertung die resultierende Intensitätsdifferenz. Die vom ersten Lichtfeld bzw. Detektionsfeld reflektierte erste Empfangsstrahlung bleibt unbeeinflusst, so dass die Auswerteund Steuereinheit bei der Auswertung die gleichbleibende Intensität der ersten Empfangsstrahlung erkennt.

Quert ein unbefugtes Objekt, wie beispielsweise ein Tier, ein Ball usw., den Erfassungsbereich der optischen Messvorrichtung, dann führt dies zu Reflektionsänderungen im ersten Lichtfeld bzw. Detektionsfeld und im zweiten Lichtfeld bzw. Detektionsfeld. Das bedeutet, dass sowohl die Intensität der ersten Empfangsstrahlung als auch der zweiten Empfangsstrahlung verändert wird. Diese Intensitätsdifferenzen erkennt die Auswerte- und Steuereinheit während der Auswertung und schließt auf eine ungewollte bzw. unbefugte Beeinflussung der Lichtfelder, so dass kein Ausgabesignal erzeugt wird.

Ausführungsformen der vorliegenden Erfindung ermöglichen somit in vorteilhafter Weise, dass ein Fahrzeugbenutzer, der sich seinem Fahrzeug nähert und aufgrund eines zu tragenden Gegenstandes keine Hand zur manuellen Auslösung eines Öffnungsvorgangs der Fahrzeugklappe frei hat, durch bewusstes Einbringen eines Objektes, vorzugsweise seines Fußes, in den Erfassungsbereich der optischen Messvorrichtung die korrespondierende Klappe ohne zusätzliche manuelle Betätigung automatisch öffnen kann. Die Berechtigung zur Auslösung des Öffnungsvorgangs wird dabei von dem Zugangsberechtigungssystem festgestellt, welches überprüft, ob sich ein dem Fahrzeug zugeordnetes tragbares Authentikationselement, wie beispielsweise ein elektronischer Fahrzeugschlüssel, im Erfassungsbereich des Zugangsberechtigungssystems befindet. Das Zugangsberechtigungssystem führt über eine Kommunikationsverbindung eine korrespondierende verschlüsselte Datenkommunikation mit dem Authentikationselement durch und gibt nach einem positiven Authentikationsvorgang das Zugangsberechtigungssignal an das Steuergerät aus.

Bei einer bevorzugten Ausführungsform der vorliegenden Erfindung wird wenigstens eines der beiden Lichtfelder sichtbar auf der Oberfläche markiert. Zu diesem Zweck kann wenigstens einer der beiden optischen Sender eine Sendestrahlung im sichtbaren Lichtspektrum abstrahlen. Alternativ können der erste und zweite optische Sender jeweils eine Sendestrahlung im nicht sichtbaren Lichtspektrum abstrahlen und ein dritter Sender kann vorgesehen werden, welcher eine Sendestrahlung im sichtbaren Lichtspektrum abstrahlt und das korrespondierende Lichtfeld auf der Oberfläche markiert. Vorzugsweise wird das zweite Lichtfeld auf der Oberfläche entweder durch den zweiten optischen Sender oder durch den dritten optischen Sender sichtbar markiert. Die sichtbare Darstellung wenigstens eines der beiden Lichtfelder erleichtert das Auffinden des Detektionsbereichs und somit das Erzeugen des Ausgabesignals und das Auslösen eines Öffnungsvorgangs.

In vorteilhafter Ausgestaltung der erfindungsgemäßen Messvorrichtung weist das erste Lichtfeld eine einseitig offene Form, vorzugsweise eine U-Form bzw. Hufeisenform auf, welche aus mehreren Lichtpunkten zusammengesetzt werden kann. Die offene U-Form bzw. Hufeisenform weist in vorteilhafter Weise die größte Ähnlichkeit zu einem beschuhten menschlichen Fuß auf, der vorzugsweise zur Erzeugung des Ausgabesignals vom offenen Ende her in das erste Lichtfeld eingebracht werden kann, ohne das erste Lichtfeld zu berühren, so dass das erste Lichtfeld den beschuhten Fuß umrahmt. Zur Erzeugung der einzelnen Lichtpunkte kann der mindestens eine erste optische Sender jeweils eine Sendediode aufweisen. Zur Darstellung der offenen Form auf der Oberfläche im Überwachungsbereich können die Sendedioden mit verschiedenen vorgegebenen Abstrahlwinkeln angeordnet werden. Alternativ kann der mindestens eine erste optische Sender zur Erzeugung der einzelnen Lichtpunkte nur eine Sendediode und eine Optik aufweisen, welche das Licht der Sendediode mit verschiedenen vorgegebenen Abstrahlwinkeln verteilt und so die einzelnen Lichtpunkte auf der Oberfläche im Überwachungsbereich erzeugt.

In weiterer vorteilhafter Ausgestaltung der erfindungsgemäßen Messvorrichtung kann das zweite Lichtfeld als ein einzelner Lichtpunkt mit einem vorgegebenen Durchmesser erzeugt werden. Das zweite Lichtfeld wird vorzugsweise am offenen Ende des ersten Lichtfelds angeordnet und ist zumindest teilweise vom ersten Lichtfeld umgeben. Die Anordnung der beiden Lichtfelder an der Oberfläche im Überwachungsbereich erfolgt in vorteilhafter Weise so, dass das als einzelner Lichtpunkt ausgeführte zweite Lichtfeld vorgegebene Abstände zu den einzelnen Lichtpunkten des ersten Lichtfelds aufweist. Dies ermöglicht eine besonders einfache Erzeugung des Ausgabesignals, wenn der beschuhte Fuß von hinten in den offenen Bereich des ersten Lichtfelds eingeführt wird und dabei gleichzeitig das zweite Lichtfeld abdeckt, so dass die vom ersten Lichtfeld reflektierte erste Empfangsstrahlung vom Auslöseobjekt, beispielsweise dem beschuhten Fuß unbeeinflusst bleibt, während das zweite Lichtfeld zumindest teilweise vom Auslöseobjekt abgedeckt und die vom zweiten Lichtfeld reflektierte zweite Empfangsstrahlung beeinflusst wird. Um den einzelnen Lichtpunkt des zweiten Lichtfelds an einer gewünschten Stelle auf der Oberfläche im Überwachungsbereich zu erzeugen, kann der mindestens eine zweite optische Sender zur Erzeugung des einzelnen Lichtpunkts mindestens eine Sendediode aufweisen, welche mit einem vorgegebenen Abstrahlwinkel angeordnet ist.

In weiterer vorteilhafter Ausgestaltung der erfindungsgemäßen Messvorrichtung erzeugen der mindestens eine erste optische Sender die erste Sendestrahlung und der mindestens eine zweite optische Sender die zweite Sendestrahlung im gleichen Frequenzbereich, wobei ein Zeitmultiplexverfahren die erste Sendestrahlung und die zweite Sendestrahlung zeitlich versetzt zueinander abstrahlt, und wobei der verwendete Frequenzbereich Frequenzen des sichtbaren oder des nicht sichtbaren Lichtspektrums umfasst. Das verwendete Zeitmultiplexverfahren ermöglicht in vorteilhafter Weise eine einfache Zuordnung der reflektierten ersten bzw. zweiten Empfangsstrahlung zum ersten bzw. zweiten Lichtfeld, da die resultierenden Empfangsstrahlungen ebenfalls zeitlich versetzt empfangen werden.

In weiterer vorteilhafter Ausgestaltung der erfindungsgemäßen Messvorrichtung erzeugt der mindestens eine erste optische Sender die erste Sendestrahlung in einem ersten Frequenzbereich, und der mindestens eine zweite optische Sender erzeugt die zweite Sendestrahlung in einem vom ersten Frequenzbereich verschiedenen zweiten Frequenzbereich. Dies ermöglicht in vorteilhafter Weise ebenfalls eine einfache Zuordnung der reflektierten ersten bzw. zweiten Empfangsstrahlung zum ersten bzw. zweiten Lichtfeld. So kann der mindestens eine erste optische Sender einen ersten Frequenzbereich aufweisen, welcher Frequenzen des nicht sichtbaren Lichtspektrums umfasst. Ein zweiter optischer Sender kann einen zweiten Frequenzbereich aufweisen, welcher Frequenzen des nicht sichtbaren oder des sichtbaren Lichtspektrums umfasst. Das bedeutet, dass der zweite optische Sender ein nicht sichtbares zweites Lichtfeld bzw. Detektionsfeld oder ein sichtbares zweites Lichtfeld bzw. Detektionsfeld auf der Oberfläche im Überwachungsbereich erzeugt. Deshalb kann ein dritter optischer Sender zur Markierung bzw. Sichtbarmachung des zweiten Lichtfelds bzw. Detektionsfelds verwendet werden, welcher einen Frequenzbereich aufweist, welcher Frequenzen des sichtbaren Lichtspektrums umfasst. Somit erzeugen der zweite und dritte optische Sender gemeinsam das sichtbare zweite Lichtfeld.

In weiterer vorteilhafter Ausgestaltung der erfindungsgemäßen Messvorrichtung steuert die Auswerte- und Steuereinheit den mindestens einen ersten optischen Sender und den mindestens einen zweiten optischen Sender basierend auf dem Halios-Messprinzip an und wertet die von dem mindestens einen optischen Empfänger empfangene erste und zweite Empfangsstrahlung zur Objekterkennung nach dem Halios-Messprinzip aus. Das Halios-Messprinzip umfasst einen optischen Sender zur Erzeugung eines Detektionsfelds, einen optischen Kompensationssender, einen optischen Empfänger, einen Synchrondemodulator und mindestens einen Regler. Hierbei sendet der optische Sender rechteckförmig amplitudenmodulierte Sendelichtstrahlung aus. Über eine Reflektion im Detektionsfeld gelangt ein Teil dieses Lichtes als Empfangslichtstrahlung zum optischen Empfänger. Der optische Kompensationssender sendet ebenfalls rechteckförmig amplitudenmodulierte Kompensationslichtstrahlung direkt zum optischen Empfänger, welche aber um genau 180° phasenversetzt zur Sendelichtstrahlung ist. Am optischen Empfänger überlagert sich die Empfangslichtstrahlung mit der Kompensationslichtstrahlung und beide Lichtstrahlungen heben sich zu einem Gleichsignal auf, falls sie genau die gleiche Amplitude aufweisen. Der Synchrondemodulator kann so einfach detektieren, welcher optische Sender stärker sendet. Diese Information führt der Synchrondemodulator dem mindestens einen Regler zu, welcher die Sendeamplitude des Kompensationssenders so anpasst, dass sich die Empfangslichtstrahlung wieder zu einem Amplitudenunterschied von Null ergänzt. Ändert sich nun das Reflektionsverhalten des Detektionsfelds, dann führt dies zu einer korrespondierenden Änderung der reflektierten Empfangslichtstrahlung, welche vom optischen Sender über das Detektionsfeld zum optischen Empfänger gelangt. Dies bewirkt unmittelbar ein Nachführen der Intensität des optischen Kompensationssenders durch den mindestens einen Regler, um weiterhin die Regelbedingung zu erfüllen. Dieses Nachstellen bewirkt eine Änderung im als Ausgangssignal fungierenden Regelsignal. Damit stellt das Regelsignal ein Maß für die Reflektion des Detektionsfelds dar. Da Ausführungsformen der vorliegenden Erfindung mindestens zwei optische Sender umfassen, ist für jeden optischen Sender ein Regler vorgesehen.

In vorteilhafter Ausgestaltung des erfindungsgemäßen Fahrzeugs kann das erste Lichtfeld so auf der Oberfläche im Überwachungsbereich erzeugt werden, dass die einseitig offene Form des erzeugten ersten Lichtfelds vom Fahrzeug weg zeigt.

In weiterer vorteilhafter Ausgestaltung des erfindungsgemäßen Fahrzeugs ist die automatisch öffnende Klappe beispielsweise eine Einstiegstür und/oder eine Heckklappe und/oder ein Heckdeckel des Fahrzeugs.

In weiterer vorteilhafter Ausgestaltung des erfindungsgemäßen Fahrzeugs können die vorgegebenen Abstrahlwinkel der Sendedioden des mindestens einen ersten optischen Senders und des mindestens einen zweiten optischen Senders zur Erzeugung der einzelnen Lichtpunkte in vorteilhafter Weise so vorgegeben werden, dass im Umfeld der korrespondierenden automatisch zu öffnenden Klappe an der Fahrbahnoberfläche das zweite Lichtfeld am offenen Ende des ersten Lichtfelds angeordnet ist und zumindest teilweise vom ersten Lichtfeld umgeben ist, wobei die einzelnen Lichtpunkte des ersten Lichtfelds vorgegebene Abstände zum einzelnen Lichtpunkt des zweiten Lichtfelds aufweisen.

In weiterer vorteilhafter Ausgestaltung des erfindungsgemäßen Fahrzeugs erzeugt die Auswerte- und Steuereinheit das Ausgabesignal, wenn ein Auslöseobjekt, vorzugsweise ein Fuß, das zweite Lichtfeld zumindest teilweise bedeckt ohne das erste Lichtfeld zu berühren.

Nachfolgend werden Ausführungsbeispiele der Erfindung anhand einer zeichnerischen Darstellung näher erläutert. In den Zeichnungen bezeichnen gleiche Bezugszeichen Komponenten bzw. Elemente, die gleiche bzw. analoge Funktionen ausführen.

In der Darstellung zeigt:
- Fig. 1: eine schematische perspektivische Darstellung eines Heckbereichs eines Fahrzeugs, welches ein Ausführungsbeispiel einer erfindungsgemäßen optischen Messvorrichtung umfasst.
- Fig. 2: ein schematisches Blockdiagramm des Fahrzeugs aus Fig. 1.
- Fig. 3: Ein schematisches Blockdiagramm des Ausführungsbeispiels der erfindungsgemäßen optischen Messvorrichtung für ein Fahrzeug aus Fig. 1.
- Fig. 4: eine schematische perspektivische Darstellung einer Sensoranordnung für das in Fig. 1 und 2 dargestellte Ausführungsbeispiel der erfindungsgemäßen optischen Messvorrichtung für ein Fahrzeug,
- Fig. 5: ein zu Fig. 3 alternatives Blockdiagramm bei Verwendung einer Kamera mit Pixelauswertung.

Ausführliche Beschreibung bevorzugter Ausführungsbeispiele

Die Erfindung wird jetzt beispielhaft unter bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

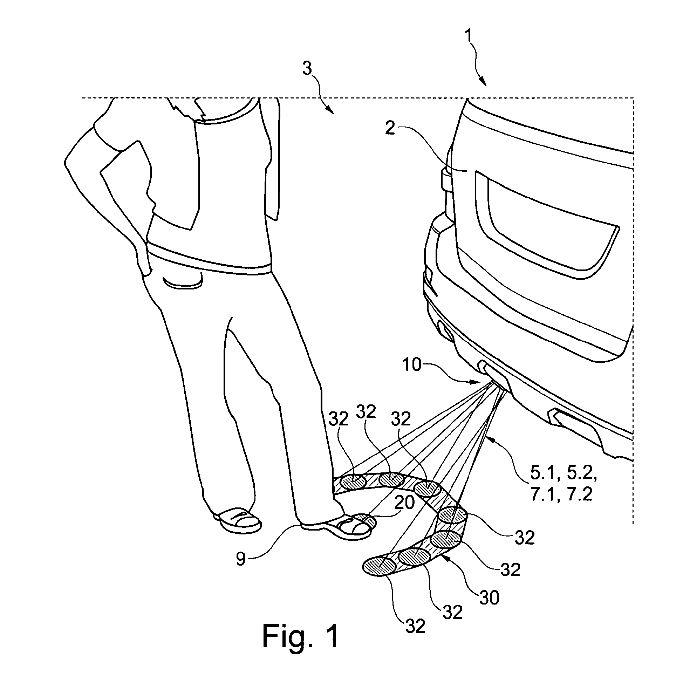

Wie aus Fig. 1 bis 3 ersichtlich ist, ist das Fahrzeug 1 im dargestellten Ausführungsbeispiel ein Kraftfahrzeug und umfasst ein Zugangsberechtigungssystem 42, mindestens eine Klappe 2, welche einen Öffnungsmechanismus 2.1 aufweist, eine Umfeldüberwachungsvorrichtung 10 und ein Steuergerät 40. Das Steuergerät 40 erzeugt in Abhängigkeit eines vom Zugangsberechtigungssystems 42 erzeugten Zugangsberechtigungssignals S_{B} und eines von der Umfeldüberwachungsvorrichtung 10 erzeugten Ausgabesignals S_{Aus} einen Öffnungsbefehl S_{Auf} und gibt diesen an den Öffnungsmechanismus 2.1 der mindestens einen Klappe 2 aus, welcher die Klappe 2 ohne manuelle Betätigung automatisch öffnet.

Aus dem Stand der Technik sind verschiedene Ausführungsformen von Zugangsberechtigungssystemen 42 bekannt, welche die Berechtigung zur Auslösung eines Öffnungsvorgangs mindestens einer Klappe 2 durch eine entsprechende verschlüsselte Datenkommunikation mit einem dem Fahrzeug 1 zugeordneten tragbaren Authentikationselement überprüfen, welches sich im Erfassungsbereich des Zugangsberechtigungssystems 42 befindet. Daher wird hier auf eine ausführliche Beschreibung des Zugangsberechtigungssystems 42 verzichtet. Für die vorliegende Erfindung wird nur das Zugangsberechtigungssignal S_{B} verwendet, welches das Ergebnis einer positiven Benutzerauthentifikation repräsentiert. Befindet sich ein berechtigtes Authentikationselement, wie beispielsweise ein elektronischer Fahrzeugschlüssel, im Erfassungsbereich des Zugangsberechtigungssystems 2, dann gibt das Zugangsberechtigungssystem 42 das Zugangsberechtigungssignal S_{B} an das Steuergerät 40 aus. Dadurch kann ein automatischer Öffnungsvorgang für die mindestens eine Klappe 2 ausgelöst werden, wenn die Umfeldüberwachungsvorrichtung 10 das Ausgabesignal S_{Aus} erzeugt und an das Steuergerät 40 ausgibt.

Die Umfeldüberwachungsvorrichtung 10 ist als optische Messvorrichtung ausgeführt, welche mindestens einen optischen Sender 11, 12, 13, 14, welcher eine Sendestrahlung 5.1, 5.2 erzeugt und in einen Überwachungsbereich 3 abstrahlt, und mindestens einen optischen Empfänger 15, welcher eine resultierende Empfangsstrahlung 7.1, 7.2 aus dem Überwachungsbereich empfängt umfasst. Eine Auswerte- und Steuereinheit 19 wertet die Empfangsstrahlung 7.1, 7.2 zur Objekterkennung aus.

Erfindungsgemäß erzeugt mindestens ein erster optischer Sender 11 durch Aussenden einer gerichteten ersten Sendestrahlung 5.1 ein erstes Lichtfeld 30 mit einer vorgegebenen Form auf einer Oberfläche im Überwachungsbereich 3 und mindestens ein zweiter optischer Sender 12, 13 erzeugt durch Aussenden einer gerichteten zweiten Sendestrahlung 5.2 ein zweites Lichtfeld 20 mit einer vorgegebenen Form im benachbarten Umfeld des ersten Lichtfelds 30. Die Auswerte- und Steuereinheit 19 empfängt über den mindestens einen optischen Empfänger 15 eine von der Oberfläche des ersten Lichtfeldes 30 reflektierte erste Empfangsstrahlung 7.1 und eine von der Oberfläche des zweiten Lichtfeldes 20 reflektierte zweite Empfangsstrahlung 7.2. Die Auswerte- und Steuereinheit 19 erzeugt das Ausgabesignal S_{Aus}, wenn während der Auswertung eine durch ein im Überwachungsbereich 3 erkanntes Auslöseobjekt 9 bewirkte Veränderung der reflektierten zweiten Empfangsstrahlung 7.2 und eine durch das Auslöseobjekt 9 unveränderte reflektierte erste Empfangsstrahlung 7.1 erkannt werden.

Wie aus Fig. 1 weiter ersichtlich ist, weist das nicht sichtbare erste Lichtfeld 30 bzw. Detektionsfeld im dargestellten Ausführungsbeispiel eine einseitig offene Form, vorzugsweise eine U-Form und/oder Hufeisenform auf, welche aus mehreren nicht sichtbaren Lichtpunkten 32 zusammengesetzt ist. Das sichtbare zweite Lichtfeld 20 bzw. Detektionsfeld ist ein einzelner sichtbarer Lichtpunkt mit einem vorgegebenen Durchmesser, welcher am offenen Ende des ersten Lichtfelds 30 bzw. Detektionsfelds angeordnet ist und zumindest teilweise vom ersten Lichtfeld 30 bzw. Detektionsfeld umgeben ist. Der einzelne Lichtpunkt des zweiten Lichtfelds 20 bzw. Detektionsfelds weist vorgegebene Abstände zu den einzelnen Lichtpunkten 32 des ersten Lichtfelds 30 bzw. Detektionsfelds. Wie aus Fig. 1 weiter ersichtlich ist, wird das erste Lichtfeld 30 so auf der Fahrbahnoberfläche erzeugt, dass die einseitig offene Form des erzeugten ersten Lichtfelds 30 bzw. Detektionsfelds vom Fahrzeug 1 weg zeigt. Im dargestellten Ausführungsbeispiel werden die beiden Lichtfelder 20, 30 auf der Fahrbahnoberfläche im Heckbereich des Fahrzeugs 1 erzeugt, um die als Heckklappe ausgeführte automatisch öffnende Klappe 2 automatisch zu öffnen. Bei nicht dargestellten Ausführungsformen der vorliegenden Erfindung können die beiden Lichtfelder 20, 30 auch im Bereich einer Einstiegstür und/oder eines Heckdeckels auf der Fahrbahnoberfläche erzeugt werden, um einen automatischen Öffnungsvorgang der korrespondierenden Klappe 2 auszulösen.

Ein in eines der beiden Lichtfelder 20, 30 bzw. Detektionsfelder eingebrachtes Auslöseobjekt 9 verändert die Reflektion des korrespondierenden Lichtfelds 20, 30 und kann somit detektiert werden. Die beiden Lichtfelder 20, 30 bzw. Detektionsfelder zeigen in eine Richtung, so dass eine Person beispielsweise einen beschuhten Fuß 9 so auf das als Lichtpunkt ausgeführte zweite Lichtfeld 20 bzw. Detektionsfeld stellen kann, dass das Auslöseobjekt 9 bzw. der Fuß das zweite Lichtfeld 30 bzw. Detektionsfeld nicht beeinflusst. Quert ein Objekt, wie beispielsweise ein Tier oder ein Ball, den Überwachungsbereich 3, führt das zu Reflektionsänderungen in beiden Lichtfeldern 20, 30 bzw. Detektionsfeldern, also sowohl im Bereich des ersten U-förmigen Lichtfelds 30 bzw. Detektionsfelds als auch im Bereich des als Lichtpunkt ausgeführten zweiten Lichtfelds 20 bzw. Detektionsfelds. Wird jedoch das Auslöseobjekt 9, hier der Fuß, von hinten in den offenen Bereich des ersten U-förmigen Lichtfelds 30 bzw. Detektionsfelds eingeführt, so findet eine unterscheidbare Betätigung nur des als Lichtpunkt ausgeführten zweiten Lichtfelds 20 bzw. Detektionsfelds statt.

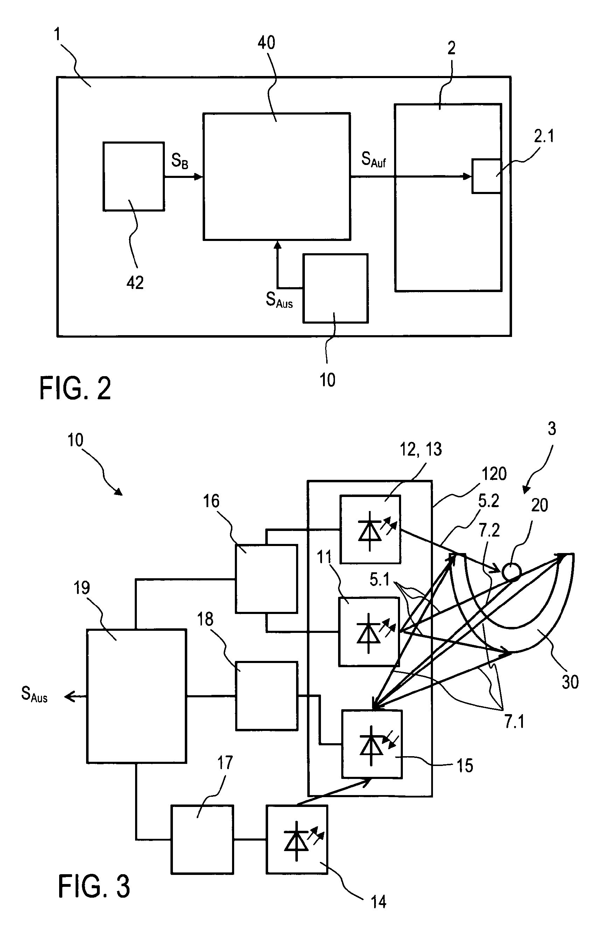

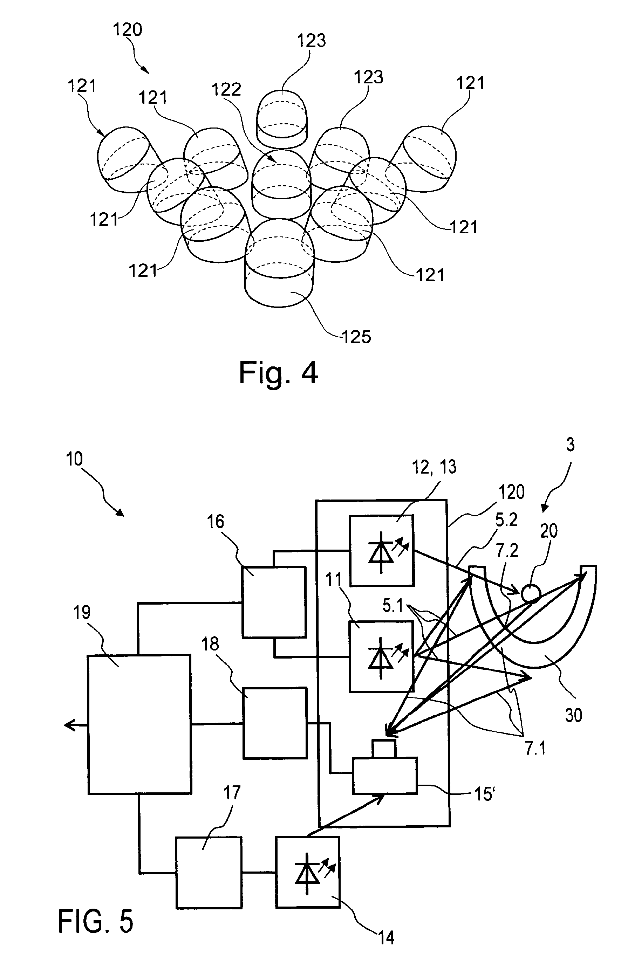

Wie aus Fig. 3 und 4 weiter ersichtlich ist, misst die optische Messvorrichtung 10 für ein Fahrzeug 1 Reflektionen der beiden Lichtfelder 20, 30 bzw. Detektionsfelder mit dem in einer Sensoranordnung 120 angeordneten optischen Empfänger 15, der beispielsweise als Fotodiode 125 oder auch als entsprechend beschaltete LED oder als Kamera 15' ausgeführt ist. Die Sensoranordnung 120 umfasst den ersten optischen Sensor 11, der mehrere Leuchtdioden 121 aufweist, welche zueinander in bestimmten Winkeln angeordnet sind und jeweils einen vorgegebenen Abstrahlwinkel aufweisen, um auf der Fahrbahnoberfläche in Überwachungsbereich 3 die gewünschte Form des ersten Lichtfelds 30, beispielsweise ein U-Form bzw. eine Hufeisenform zu projizieren. Bei einer nicht dargestellten alternativen Ausführungsform weist der mindestens eine erste optische Sender 11 zur Erzeugung der einzelnen Lichtpunkte 32 nur eine Sendediode und eine Optik auf, welche das Licht der Sendediode mit verschiedenen vorgegebenen Abstrahlwinkeln verteilt, um die einzelnen Lichtpunkte des ersten Lichtfelds 30 in der gewünschten Form auf die Fahrbahnoberfläche zu projizieren.

Im dargestellten Ausführungsbeispiel erzeugen die Leuchtdioden 121 des ersten optischen Senders 11 die erste Sendestrahlung 5.1 in einem ersten Frequenzbereich beispielsweise im Infrarotfrequenzbereich, welcher Frequenzen des nicht sichtbaren Lichtspektrums umfasst. Des Weiteren umfasst die Senderanordnung 120 den zweiten optischen Sender 12, welcher eine Infrarotdiode 122 umfasst, welche einen vorgegebenen Abstrahlwinkel aufweist, um auf der Fahrbahnoberfläche im Umfeld des ersten Lichtfelds 30 die gewünschte Form des zweiten Lichtfelds 20, beispielsweise einen Punkt mit einem vorgegebenen Durchmesser zu projizieren. Im dargestellten Ausführungsbeispiel erfolgt die Projektion im Infrarotfrequenzbereich, also im für das menschliche Auge nichtsichtbaren Bereich. Zur Unterscheidung der resultierenden Empfangsstrahlungen 7.1, 7.2 werden die erste Sendestrahlung 5.1 und die zweite Sendestrahlung 5.2 durch ein Zeitmultiplexverfahren zeitlich versetzt zueinander abgestrahlt. Dies ermöglicht eine bessere Zuordnung der reflektierten Empfangsstrahlung 7.1, 7.2 zum ersten oder zweiten Lichtfeld 30, 20. Zur Sichtbarmachung des zweiten Lichtfelds 20 weist die Sensoranordnung 120 einen dritten optischen Sender 13 auf, welcher beispielsweise eine Laserdiode 123 umfasst, welche einen vorgegebenen Abstrahlwinkel aufweist, um auf der Fahrbahnoberfläche im Umfeld des ersten Lichtfelds 30 die gewünschte Form des zweiten Lichtfelds 20, beispielsweise einen Punkt mit einem vorgegebenen Durchmesser, zu markieren und für den Benutzer sichtbar zu machen. Daher erzeugt die Laserdiode 123 des dritten optischen Senders 13 eine Lichtstrahlung im Frequenzbereich des sichtbaren Lichtspektrums.

Bei einer nicht dargestellten alternativen Ausführungsform der erfindungsgemäßen Messvorrichtung 10 erzeugt der mindestens eine erste optische Sender 11 die erste Sendestrahlung 5.1 in einem ersten Frequenzbereich, und der mindestens eine zweite optische Sender 12 erzeugt die zweite Sendestrahlung 5.2 in einem vom ersten Frequenzbereich verschiedenen zweiten Frequenzbereich. Dies ermöglicht in vorteilhafter Weise ebenfalls eine einfache Zuordnung der reflektierten ersten bzw. zweiten Empfangsstrahlung 7.1, 7.2 zum ersten bzw. zweiten Lichtfeld 30, 20. So kann der mindestens eine erste optische Sender 11 einen ersten Frequenzbereich aufweisen, welcher Frequenzen des nicht sichtbaren Lichtspektrums umfasst. Ein zweiter optischer Sender 12 kann einen zweiten Frequenzbereich aufweisen, welcher Frequenzen des nicht sichtbaren oder des sichtbaren Lichtspektrums umfasst. Das bedeutet, dass der zweite optische Sender 12 ein nicht sichtbares zweites Lichtfeld 20 bzw. Detektionsfeld oder ein sichtbares zweites Lichtfeld 20 bzw. Detektionsfeld auf der Oberfläche im Überwachungsbereich 3 erzeugen kann. Auch hier kann der dritte optische Sender 13 zur Markierung bzw. Sichtbarmachung des zweiten Lichtfelds 20 bzw. Detektionsfelds verwendet werden, wenn der zweite optische Sender 12 die zweite Sendefrequenz 5.2 im nicht sichtbaren Lichtspektrum abstrahlt.

Durch die vorgegebenen Abstrahlwinkel der Sendedioden 121, 122, 123 des ersten optischen Senders 11 sowie des zweiten und dritten optischen Senders 12, 13 können die einzelnen Lichtpunkte 20, 32 der beiden Lichtfelder 20, 30 bzw. Detektionsfelder so vorgegeben werden, dass im Umfeld der korrespondierenden automatisch zu öffnenden Klappe 2 an der Fahrbahnoberfläche das zweite Lichtfeld 20 am offenen Ende des ersten Lichtfelds 30 angeordnet ist und zumindest teilweise vom ersten Lichtfeld 30 umgeben ist, wobei die einzelnen Lichtpunkte 32 des ersten Lichtfelds 30 vorgegebene Abstände zum einzelnen Lichtpunkt des zweiten Lichtfelds 20 aufweisen.

Wie aus Fig. 3 weiter ersichtlich ist, steuert die Auswerte- und Steuereinheit 19 den mindestens einen ersten optischen Sender 11 und den mindestens einen zweiten optischen Sender 12 basierend auf dem Halios-Messprinzip an und wertet die von dem mindestens einen optischen Empfänger 15 empfangene Empfangsstrahlung 7.1, 7.2 zur Objekterkennung nach dem Halios-Messprinzip aus.

Zu diesem Zweck umfasst die optische Messvorrichtung 10 einen vierten optischen Sender 14, welcher mindestens eine Kompensationsleuchtdiode aufweist, einen ersten Modulator 16 zur Modulation des ersten optischen Senders 11 und des zweiten optischen Senders 12, einen zweiten Modulator 17 zur Modulation des vierten optischen Senders 14 und einen Synchrondemodulator 18. Um das Halios-Messprinzip anzuwenden, weist der vierte optische Sender 14 eine nicht dargestellte Kompensationsleuchtdiode für den ersten optischen Sender 11 und für den zweiten optischen Sender 12 auf, welche analog zum ersten optischen Sender 11 und dem zweiten optischen Sender 12 ebenfalls im Zeitmultiplexverfahren betrieben wird. Das bedeutet, dass die Kompensationsleuchtdiode während eines dem ersten optischen Sender 11 zugeordneten Zeitfensters zur Kompensation des ersten optischen Senders 11 und während eines dem zweiten optischen Sender 11 zugeordneten Zeitfensters zur Kompensation des zweiten optischen Senders 12 verwendet wird. Der erste bzw. zweite optische Sender 11, 12 werden über den ersten Modulator 16 moduliert und strahlen rechteckförmig amplitudenmodulierte erste und zweite Sendestrahlungen 5.1, 5.2 aus. Über eine Reflektion am ersten Lichtfeld 30 gelangt ein Teil der ersten Sendestrahlung 5.1 als reflektierte erste Empfangsstrahlung 7.1 zum optischen Empfänger 15, und über eine Reflektion am zweiten Lichtfeld 20 gelangt ein Teil der zweiten Sendestrahlung 5.2 als reflektierte zweite Empfangsstrahlung 7.2 zum optischen Empfänger 15. Die Kompensationsleuchtdiode sendet ebenfalls rechteckförmig amplitudenmodulierte Lichtstrahlungen zum optischen Empfänger 15 aus, welche aber um genau 180° zu den ersten bzw. zweiten Sendestrahlungen 5.1, 5.2 phasenversetzt sind. Am Empfänger 15 überlagern sich die erste Sendestrahlung 5.1 und die zweite Sendestrahlung 5.2 zeitversetzt mit der von der Kompensationsleuchtdiode erzeugten Lichtstrahlung und heben sich jeweils zu einem Gleichsignal auf, falls sie genau die gleiche Amplitude aufweisen. Der Synchrondemodulator 18 kann so einfach detektieren, ob der erste optische Sender 11 oder die Kompensationsleuchtdiode bzw. der zweite optische Sender 12 oder die Kompensationsleuchtdiode stärker sendet. Diese Information führt der Synchrondemodulator 18 der Auswerte- und Steuereinheit 19 zu, welche über einen ersten Regler die Sendeamplitude der Kompensationsleuchtdiode so anpasst, dass sich die erste Empfangsstrahlung 7.1 und die von der Kompensationsleuchtdiode erzeugte Lichtstrahlung wieder zu einem Amplitudenunterschied von Null ergänzen, und über einen zweiten Regler die Sendeamplitude der Kompensationsleuchtdiode so anpasst, dass sich die zweite Empfangsstrahlung 7.2 und die von der Kompensationsleuchtdiode erzeugte Lichtstrahlung wieder zu einem Amplitudenunterschied von Null ergänzen.

Ändert sich nun das Reflektionsverhalten des ersten Lichtfelds 30 bzw. Detektionsfelds oder des zweiten Lichtfelds 20 bzw. Detektionsfelds, beispielsweise durch Einführen des Auslöseobjekts 9, dann kann die Auswerte- und Steuereinheit 19 diese Änderungen des Reflektionsverhaltens durch Auswerten des erforderlichen Regelsignals zur Nachführung der Amplitude der Kompensationsleuchtdiode auf einfache Weise erkennen, da das jeweilige Regelsignal ein Maß für die jeweilige Reflektion am ersten und/oder zweiten Lichtfeld 20, 30 darstellt.

Wird der optische Empfänger gemäß Fig. 5 durch wenigstens eine Kamera 15' gebildet, werden die von der Kamera erhaltenen Bilder der Auswerte- und Steuereinheit 19 zur Erzeugung des Ausgabesignals S_{Aus} zugeleitet und ausgewertet. Die Auswertung kann z.B. durch eine Pixelauswertung der Bilder-Pixel erfolgen.

Ausführungsformen der vorliegenden Erfindung ermöglichen in vorteilhafter Weise die Auslösung eines Vorgangs, wie beispielsweise das Öffnen einer Fahrzeugklappe, ohne vorgegebene Gestik nur durch Erkennen einer Reflektionsänderung in einem Überwachungsbereich mit zwei Lichtfeldern bzw. Detektionsfeldern, wobei die besondere Form der Lichtfelder bzw. Detektionsfelder vor Fehlauslösungen schützt.

## Patentansprüche

1. Optische Messvorrichtung für ein Fahrzeug mit mindestens einem optischen Sender (11, 12, 13, 14), welcher durch Aussenden einer gerichteten ersten Sendestrahlung (5.1) ein erstes Lichtfeld (30) mit einer vorgegebenen Form auf einer Oberfläche erzeugt und in einen Überwachungsbereich (3) abstrahlt, und mindestens einem optischen Empfänger (15), welcher eine von der Oberfläche des ersten Lichtfeldes (30) reflektierte erste Empfangsstrahlung (7.1) aus dem Überwachungsbereich (3) empfängt, wobei eine Auswerte- und Steuereinheit (19) die Empfangsstrahlung (7.1, 7.2) zur Objekterkennung auswertet und ein Ausgabesignal (S_{Aus}) erzeugt, wenn die Auswerte- und Steuereinheit (19) eine durch ein im Überwachungsbereich (3) erkanntes Auslöseobjekt (9) bewirkte Veränderung der reflektierten Empfangsstrahlung erkennt,
**dadurch gekennzeichnet, dass** mindestens ein erster optischer Sender (11) das erste Lichtfeld (30) im Überwachungsbereich (3) erzeugt und mindestens ein zweiter optischer Sender (12, 13) durch Aussenden einer gerichteten zweiten Sendestrahlung (5.2) ein zweites Lichtfeld (20) mit einer vorgegebenen Form im benachbarten Umfeld des ersten Lichtfelds (30) erzeugt, wobei die Auswerte- und Steuereinheit (19) über den mindestens einen optischen Empfänger (15, 15') die reflektierte erste Empfangsstrahlung (7.1) und eine von der Oberfläche des zweiten Lichtfeldes (20) reflektierte zweite Empfangsstrahlung (7.2) empfängt und auswertet, wobei die Auswerte- und Steuereinheit (19) ein Ausgabesignal (S_{Aus}) erzeugt, wenn die Auswerte- und Steuereinheit (19) eine durch das Auslöseobjekt (9) bewirkte Veränderung der reflektierten zweiten Empfangsstrahlung (7.2) und eine durch das Auslöseobjekt (9) unveränderte reflektierte erste Empfangsstrahlung (7.1) erkennt.

2. Messvorrichtung nach Anspruch 1, **dadurch gekennzeichnet, dass** das erste Lichtfeld (30) eine einseitig offene Form, vorzugsweise eine U-Form aufweist, welche aus mehreren Lichtpunkten (32) zusammengesetzt ist.

3. Messvorrichtung nach Anspruch 2, **dadurch gekennzeichnet, dass** der mindestens eine erste optische Sender (11) zur Erzeugung der einzelnen Lichtpunkte (32) jeweils eine Sendediode (121) aufweist, welche mit verschiedenen vorgegebenen Abstrahlwinkeln angeordnet sind, oder wenigstens eine Sendediode und eine Optik aufweist, welche das Licht der Sendediode mit verschiedenen vorgegebenen Abstrahlwinkeln verteilt.

4. Messvorrichtung nach einem der Ansprüche 1 bis 3, **dadurch gekennzeichnet, dass** das zweite Lichtfeld (20) ein einzelner Lichtpunkt mit einem vorgegebenen Durchmesser ist und dass vorzugsweise das zweite Lichtfeld (20) am offenen Ende des ersten Lichtfelds (30) angeordnet ist und zumindest teilweise vom ersten Lichtfeld (30) umgeben ist.

5. Messvorrichtung nach Anspruch 4, **dadurch gekennzeichnet, dass** der einzelne Lichtpunkt des zweiten Lichtfelds (20) vorgegebene Abstände zu den einzelnen Lichtpunkten (32) des ersten Lichtfelds (30) aufweist.

6. Messvorrichtung nach einem der Ansprüche 4 oder 5, **dadurch gekennzeichnet, dass** der mindestens eine zweite optische Sender (12, 13) zur Erzeugung des einzelnen Lichtpunkts (20) mindestens eine Sendediode (122, 123) aufweist, welche mit einem vorgegebenen Abstrahlwinkel angeordnet ist.

7. Messvorrichtung nach einem der vorhergehenden Ansprüche, **dadurch gekennzeichnet, dass** der mindestens eine erste optische Sender (11) die erste Sendestrahlung (5.1) und der mindestens eine zweite optische Sender (12, 13) die zweite Sendestrahlung (5.2) im gleichen Frequenzbereich erzeugen, wobei ein Zeitmultiplexverfahren die erste Sendestrahlung (5.1) und die zweite Sendestrahlung (5.2) zeitlich versetzt zueinander abstrahlt, und wobei der verwendete Frequenzbereich Frequenzen des sichtbaren oder des nicht sichtbaren Lichtspektrums umfasst.

8. Messvorrichtung nach einem der vorhergehenden Ansprüche, **dadurch gekennzeichnet, dass** der mindestens eine erste optische Sender (11) die erste Sendestrahlung (5.1) in einem ersten Frequenzbereich erzeugt, und der mindestens eine zweite optische Sender (12, 13) die zweite Sendestrahlung (5.2) in einem vom ersten Frequenzbereich verschiedenen zweiten Frequenzbereich erzeugt, oder dass der mindestens eine erste optische Sender (11) einen ersten Frequenzbereich aufweist, welcher Frequenzen des nicht sichtbaren Lichtspektrums umfasst, und /oder dass der mindestens eine zweite optische Sender (12) einen zweiten Frequenzbereich aufweist, welcher Frequenzen des nicht sichtbaren oder des sichtbaren Lichtspektrums umfasst.

9. Messvorrichtung nach Anspruch 7 oder 8, **dadurch gekennzeichnet, dass** ein dritter optischer Sender (13) zur Markierung des zweiten Lichtfelds (20) einen Frequenzbereich aufweist, welcher Frequenzen des sichtbaren Lichtspektrums umfasst.

10. Messvorrichtung nach einem der vorhergehenden Ansprüche, **dadurch gekennzeichnet**, das der optische Empfänger durch wenigstens eine Kamera (15') gebildet ist und dass die Auswerte- und Steuereinheit (19) die von der Kamera erhaltenen Bilder zur Erzeugung des Ausgabesignals (S_{Aus}) auswertet, insbesondere in Form einer Pixelauswertung auswertet.

11. Messvorrichtung nach einem der vorhergehenden Ansprüche, **dadurch gekennzeichnet, dass** die Auswerte- und Steuereinheit (19) den mindestens einen ersten optischer Sender (11) und den mindestens einen zweiten optischer Sender (12, 13) basierend auf dem Halios-Messprinzip ansteuert und die von dem mindestens einen optischen Empfänger (15, 15') empfangene Empfangsstrahlung (7.1, 7.2) zur Objekterkennung nach dem Halios-Messprinzip auswertet.

12. Fahrzeug, insbesondere Kraftfahrzeug, mit einem Zugangsberechtigungssystem (42), mindestens einer Klappe (2), welche einen Öffnungsmechanismus (2.1) aufweist, einer Umfeldüberwachungsvorrichtung (10) und einem Steuergerät (40), welches in Abhängigkeit einer vom Zugangsberechtigungssystems (42) erkannten Zugangsberechtigung (S_{B}) und einem von der Umfeldüberwachungsvorrichtung (10) erzeugten Ausgabesignals (S_{Aus}) einen Öffnungsbefehl (S_{Auf}) erzeugt und an den Öffnungsmechanismus (2.1) der mindestens einen Klappe (2) ausgibt, welche die Klappe (2) ohne manuelle Betätigung automatisch öffnet,
**dadurch gekennzeichnet, dass** die Umfeldüberwachungsvorrichtung als optische Messvorrichtung (10) nach einem der Ansprüche 1 bis 12 ausgeführt ist.

13. Fahrzeug nach Anspruch 12, **dadurch gekennzeichnet, dass** die einseitig offene Form des erzeugten ersten Lichtfelds (30) vom Fahrzeug (1) weg zeigt und dass die automatisch öffnende Klappe (2) eine Einstiegstür und/oder eine Heckklappe und/oder ein Heckdeckel des Fahrzeugs (1) ist.

14. Fahrzeug nach einem der Ansprüche 12 oder 13, **dadurch gekennzeichnet, dass** die vorgegebenen Abstrahlwinkel der Sendedioden (121, 122, 123) des mindestens einen ersten optischen Senders (11) und des mindestens einen zweiten optischen Senders (12, 13) zur Erzeugung der einzelnen Lichtpunkte (20, 32) so vorgegeben sind, dass im Umfeld der korrespondierenden automatisch zu öffnenden Klappe (2) an der Fahrbahnoberfläche das zweite Lichtfeld (20) am offenen Ende des ersten Lichtfelds (30) angeordnet ist und zumindest teilweise vom ersten Lichtfeld (30) umgeben ist, wobei die einzelnen Lichtpunkte (32) des ersten Lichtfelds (30) vorgegebenen Abstände zum einzelnen Lichtpunkt des zweiten Lichtfelds (20) aufweisen.

15. Fahrzeug nach einem der Ansprüche 12 bis 14, **dadurch gekennzeichnet, dass** die Auswerte- und Steuereinheit (19) das Ausgabesignal (S_{Aus}) erzeugt, wenn ein Auslöseobjekt (9), vorzugsweise ein Fuß, das zweite Lichtfeld (20) zumindest teilweise bedeckt, ohne das erste Lichtfeld (30) zu berühren.

## Claims

1. Optical measuring device for a vehicle comprising at least one optical transmitter (11, 12, 13, 14) which produces a first light field (30) of a predetermined shape on a surface by emitting a first directional transmitter radiation (5.1) and radiates it into a monitored area (3), and at least one optical receiver (15) which receives a first receiver radiation (7.1), that is reflected by the surface of the first light field (30), from the monitored area (3), wherein an evaluating and control unit (19) evaluates the receiver radiation (7.1, 7.2) for the purposes of identifying an object and produces an output signal (S_{Aus}) if the evaluation and control unit (19) recognizes a change of the reflected receiver radiation (7.2) which is caused by a triggering object (9) recognized in the monitored area (3),
**characterized in that** at least one first optical transmitter (11) produces the first light field (30) in the monitored area (3) and at least one second optical transmitter (12, 13) produces a second light field (20) of a predetermined shape in the neighbouring surroundings of the first light field (30) by emitting a second directional transmitter radiation (5.2), wherein, via the at least one optical receiver (15, 15'), the evaluating and control unit (19) receives and evaluates the first receiver radiation (7.1) and a second receiver radiation (7.2) reflected by the surface of the second light field (20), wherein the evaluating and control unit (19) produces an output signal (S_{Aus}) if the evaluation and control unit (19) recognizes a change of the reflected second receiver radiation (7.2) caused by the triggering object (9) and a first receiver radiation (7.1) which is reflected unchanged by the triggering object (9).

2. A measuring device in accordance with Claim 1, **characterized in that** the first light field (30) is shaped such as to be open on one side, preferably having a U-shape, and is composed of a plurality of light spots (32).

3. A measuring device in accordance with Claim 2, **characterized in that**, for the production of the individual light spots (32), the at least one first optical transmitter (11) comprises a respective emitter diode (121) each of which is arranged at a different predetermined radiant angle, or at least one emitter diode and an optical system which distributes the light from the emitter diode over differing predetermined radiant angles.

4. A measuring device in accordance with any of the Claims 1 to 3, **characterized in that** the second light field (20) is a single light spot of a predetermined diameter and **in that** the second light field (20) is preferably arranged at the open end of the first light field (30) and is at least partly surrounded by the first light field (30).

5. A measuring device in accordance with Claim 4, **characterized in that** the single light spot of the second light field (20) has predetermined spacings from the individual light spots (32) of the first light field (30).

6. A measuring device in accordance with either of the Claims 4 or 5, **characterized in that**, for the purposes of producing the single light spot (20), the at least one second optical transmitter (12, 13) comprises at least one emitter diode (122, 123) which is arranged at a predetermined radiant angle.

7. A measuring device in accordance with any of the preceding Claims, **characterized in that** the at least one first optical transmitter (11) produces the first transmitter radiation (5.1) and the at least one second optical transmitter (12, 13) produces the second transmitter radiation (5.2) in the same frequency range, wherein the first transmitter radiation (5.1) and the second transmitter radiation (5.2) are radiated in mutually time displaced manner using a time-division multiplexing process, and wherein the frequency range used comprises frequencies in the visible or the non-visible light spectrum.

8. A measuring device in accordance with any of the preceding Claims, **characterized in that** the at least one first optical transmitter (11) produces the first transmitter radiation (5.1) in a first frequency range, and the at least one second optical transmitter (12, 13) produces the second transmitter radiation (5.2) in a second frequency range which differs from the first frequency range, or **in that** the at least one first optical transmitter (11) has a first frequency range comprising frequencies in the non-visible light spectrum, and/or **in that** the at least one second optical transmitter (12) has a second frequency range comprising frequencies in the non-visible or the visible light spectrum.

9. A measuring device in accordance with Claim 7 or 8, **characterized in that**, for the purposes of marking the second light field (20), a third optical transmitter (13) has a frequency range comprising frequencies in the visible light spectrum.

10. A measuring device in accordance with any of the preceding Claims, **characterized in that** the optical receiver is formed by at least one camera (15'), and **in that** the evaluating and control unit (19) evaluates the pictures received from the camera for the purposes of producing the output signal (S_{Aus}), in particular, in the form of a pixel evaluation process.

11. A measuring device in accordance with any of the preceding Claims, **characterized in that** the evaluating and control unit (19) controls the at least one first optical transmitter (11) and the at least one second optical transmitter (12, 13) based on the Halios measurement principle and evaluates the receiver radiation (7.1, 7.2) received by the at least one optical receiver (15, 15') for the purposes of identifying an object in accordance with the Halios measurement principle.

12. A vehicle, in particular a motor vehicle, comprising an access authorization system (42), at least one flap (2) which has an opening mechanism (2.1), a surroundings monitoring device (10) and a control device (40) which produces an opening command (S_{Auf}) in dependence on an access authorization (S_{B}) recognized by the access authorization system (42) and an output signal (S_{Aus}) produced by the surroundings monitoring device (10) and sends it to the opening mechanism (2.1) of the at least one flap (2) which automatically opens the flap (2) without manual actuation,
**characterized in that** the surroundings monitoring device is implemented as an optical measuring device (10) in accordance with any of the Claims 1 to 12.

13. A vehicle in accordance with Claim 12, **characterized in that** the open-on-one-side shape of the produced first light field (30) faces away from the vehicle (1) and **in that** the automatically opening flap (2) is an entry door and/or a tail gate and/or a boot lid of the vehicle (1).

14. A vehicle in accordance with any of the Claims 12 or 13, **characterized in that** the predetermined radiant angles of the emitter diodes (121, 122, 123) of the at least one first optical transmitter (11) and of the at least one second optical transmitter (12, 13) that are used for the production of the individual light spots (20, 32) are predetermined in such a way that the second light field (20) is arranged on the road surface at the open end of the first light field (30) in the surroundings of the corresponding automatically-opening flap (2), and is at least partly surrounded by the first light field (30), wherein the individual light spots (32) of the first light field (30) have predetermined spacings from the single light spot of the second light field (20).

15. A vehicle in accordance with any of the Claims 12 to 14, **characterized in that** the evaluating and control unit (19) produces the output signal (S_{Aus}) if a triggering object (9), preferably a foot, at least partly covers the second light field (20) without touching the first light field (30).

## Revendications

1. Dispositif de mesure optique pour un véhicule comportant au moins un émetteur optique (11, 12, 13,14), lequel produit par émission d'un premier rayonnement d'émission dirigé (5.1) un premier champ lumineux (30) ayant une forme prédéterminée sur une surface et rayonne dans une zone de surveillance (3), et au moins un récepteur optique (15), lequel reçoit de la zone de surveillance (3) un premier rayonnement de réception (7.1) réfléchi par la surface du premier champ lumineux (30), une unité de traitement et de commande (19) traitant le rayonnement de réception (7.1, 7.2) en vue d'une reconnaissance d'objet et produisant un signal de sortie (S_{Aus}) lorsque l'unité de traitement et de commande (19) reconnaît un changement du rayonnement de réception réfléchi produit par un objet déclencheur (9) reconnu dans la zone de surveillance (3),
**caractérisé en ce qu'**au moins un premier émetteur optique (11) produit le premier champ lumineux (30) dans la zone de surveillance (3) et au moins un deuxième émetteur optique (12, 13) produit par émission d'un deuxième rayonnement d'émission dirigé un deuxième champ lumineux (20) ayant une forme prédéterminée dans l'environnement voisin du premier champ lumineux (30), l'unité de traitement et de commande (19) recevant par l'intermédiaire du récepteur optique (15, 15') le premier rayonnement de réception réfléchi (7.1) et un deuxième rayonnement de réception (7.2) réfléchi par la surface du deuxième champ lumineux (20) et les traitant, l'unité de traitement et de commande (19) produisant une signal de sortie (S_{Aus}) lorsque l'unité de traitement et de commande (19) reconnaît un changement du deuxième rayonnement de réception réfléchi (7.2) produit par l'objet déclencheur (9) et un premier rayonnement de réception réfléchi (7.1) non modifié par l'objet déclencheur (9).

2. Dispositif de mesure selon la revendication 1, **caractérisé en ce que** le premier champ lumineux (30) présente une forme ouverte unilatéralement, de préférence une forme en U, laquelle est composée de plusieurs points lumineux (32).

3. Dispositif de mesure selon la revendication 2, **caractérisé en ce que** le premier émetteur optique (11), pour la production de chacun des points lumineux (32) individuels, présente une diode émettrice (121) respective, laquelle est disposée avec des angles de rayonnement prédéterminés différents ou présente au moins une diode d'émission et un élément optique qui distribue la lumière de la diode émettrice avec des angles de rayonnement prédéterminés différents.

4. Dispositif de mesure selon l'une des revendications 1 à 3, **caractérisé en ce que** le deuxième champ lumineux (20) est un point lumineux unique ayant un diamètre prédéterminé et **en ce que** le deuxième champ lumineux (20) est de préférence disposé à l'extrémité ouverte du premier champ lumineux (30) et est entouré au moins partiellement par le premier champ lumineux (30).

5. Dispositif de mesure selon la revendication 4, **caractérisé en ce que** le point lumineux unique du deuxième champ lumineux (20) présente des distances prédéterminées par rapport aux points lumineux individuels (32) du premier champ lumineux (30).

6. Dispositif de mesure selon l'une des revendications 4 et 5, **caractérisé en ce que** le deuxième émetteur optique (12, 13) présente pour la production du point lumineux unique (20) au moins une diode émettrice (122, 123) qui est disposée avec un angle de rayonnement prédéterminé.

7. Dispositif de mesure selon l'une revendications précédentes, **caractérisé en ce que** le premier émetteur optique (11) produit le premier rayonnement d'émission (5.1) et le deuxième émetteur optique (12, 13) le deuxième rayonnement d'émission (5.2) dans le même domaine de fréquences, un multiplexage temporel rayonnant le premier rayonnement d'émission (5.1) et le deuxième rayonnement d'émission (5.2) de manière décalée dans le temps l'un par rapport à l'autre, et le domaine de fréquences utilisé comprenant des fréquences du spectre lumineux visible ou non visible.

8. Dispositif de mesure selon l'une des revendications précédentes, **caractérisé en ce que** le premier émetteur optique (11) produit le premier rayonnement d'émission (5.1) dans un premier domaine de fréquences et le deuxième émetteur optique (12, 13) le deuxième rayonnement d'émission (5.2) dans un deuxième domaine de fréquences différent du premier domaine de fréquences, ou **en ce que** le premier émetteur optique (11) présente un premier domaine de fréquences qui inclut des fréquences du spectre lumineux non visible et/ou **en ce que** le deuxième émetteur optique (12) présente un deuxième domaine de fréquences qui inclut des fréquences du spectre lumineux non visible ou visible.

9. Dispositif de mesure selon la revendication 7 ou 8, **caractérisé en ce qu'**un troisième émetteur optique (13) présente pour le marquage du deuxième champ lumineux (20) un domaine de fréquences qui inclut des fréquences du spectre lumineux visible.

10. Dispositif de mesure selon l'une des revendications précédentes, **caractérisé en ce que** le récepteur optique est formé d'au moins une caméra (15') et **en ce que** l'unité de traitement et de commande (19) traite les images filmées par la caméra pour la production du signal de sortie (S_{Aus}), en particulier sous la forme d'un traitement de pixels.

11. Dispositif de mesure selon l'une des revendications précédentes, **caractérisé en ce que** l'unité de traitement et de commande (19) commande le premier émetteur optique (11) et le deuxième émetteur optique (12, 13) sur la base du principe de mesure Halios et traite le rayonnement de réception (7.1, 7.2) reçu par le récepteur optique (15, 15') en vue de la reconnaissance d'objet suivant le principe de mesure Halios.

12. Véhicule, en particulier, véhicule automobile, comportant un système de droit d'accès (42), au moins un clapet (2) présentant un mécanisme d'ouverture (2.1), un dispositif de surveillance d'environnement (10) et un appareil de commande (40) produisant un ordre d'ouverture (S_{Auf}) en fonction d'un droit d'accès (S_{B}) reconnu par le système de droit d'accès (42) et d'un signal de sortie (S_{Aus}) produit par le dispositif de surveillance d'environnement (10) et le communiquant au mécanisme d'ouverture (2.1) du clapet (2), lequel ouvre automatiquement le clapet (2) sans actionnement manuel,
**caractérisé en ce que** le dispositif de surveillance d'environnement est réalisé sous la forme du dispositif de mesure (10) selon l'une des revendications 1 à 11.

13. Véhicule selon la revendication 12, **caractérisé en ce que** la forme ouverte unilatéralement du premier champ lumineux (30) produit s'éloigne du véhicule (1) et **en ce que** le clapet (2) à ouverture automatique est une porte d'entrée et/ou une porte arrière et/ou un capot du véhicule (1).

14. Véhicule selon l'une des revendications 12 et 13, **caractérisé en ce que** les angles de rayonnement prédéterminés des diodes émettrices (121, 122, 123) du premier émetteur optique (11) et du deuxième émetteur optique (12, 13) sont prévus pour la production des points lumineux individuels (20, 32) de telle manière que le deuxième champ lumineux (20) soit disposé dans l'environnement du clapet (2) à ouverture automatique correspondant, à la surface de la chaussée, à l'extrémité ouverte du premier champ lumineux (30) et entouré au moins partiellement par le premier champ lumineux (30), les points lumineux individuels (32) du premier champ lumineux (30) présentant des distances prédéterminée par rapport au point lumineux individuel du deuxième champ lumineux (20).

15. Véhicule selon l'une des revendications 12 à 14, **caractérisé en ce qu'**unité de traitement et de commande (19) produit le signal de sortie (S_{Aus}) lorsqu'un objet déclencheur (9), de préférence un pied, couvre au moins partiellement le deuxième champ lumineux (20) sans toucher le premier champ lumineux (30).
